# EUROPEAN PATENT SPECIFICATION

(11) **EP 2 786 925 B1**
(45) Date of publication and mention of the grant of the patent: **09.01.2019**
(21) Application number: 12854143.0
(22) Date of filing: 27.11.2012
(51) Int. Cl.: B62K 11/10, B62K 19/06, B62K 19/20

(54) **FRAME STRUCTURE FOR SCOOTER-TYPE VEHICLE**
RAHMENSTRUKTUR FÜR ROLLERFAHRZEUGE
STRUCTURE DE CADRE POUR VEHICULE DE TYPE SCOOTER

(30) Priority: 02.12.2011 JP 2011265088
(43) Date of publication of application: 08.10.2014
(73) Proprietor: Honda Motor Co., Ltd., Minato-ku Tokyo 107-8556 (JP)
(72) Inventor: TAKENAKA, Masahiko, Wako-shi Saitama 351-0193 (JP)
(74) Representative: Quinterno, Giuseppe
(86) International application number: PCT/JP2012/080583
(87) International publication number: WO 2013/080957

(56) References cited:
- JP-A- H07 112 683
- JP-A- H07 112 683
- JP-A- 2008 279 959
- JP-A- 2008 279 959
- JP-A- 2010 284 994

## Description

### TECHNICAL FIELD

The present invention relates to an improvement in a scooter-type vehicle frame structure of the kind defined in the preamble of claim 1.

### BACKGROUND ART

A vehicle frame structure of that kind is disclosed in JP-A-2008279959.

Flat steps for mounting both feet are generally positioned in front of the seat in scooter-type vehicles. Configuring the vehicle from a left frame and right frame is order to support the flat steps is well-known (see, e.g., the above-cited prior art document).

The vehicle frame in the scooter-type vehicle disclosed in JP-A-2008279959 includes a main pipe and a lower frame. The main pipe extends downward from a header pipe, and the lower frame is connected to the lower end of the main pipe and extends forward and to the rear.

In the vehicle frame of JP-A-2008279959, left and right lower frames extend to the rear from the lower end of the main pipe, and a cross pipe is connected to the rear ends of the lower frames. Respective reinforcing members are attached to the main pipe and the lower frames, and a cross member bridges the lower frames.

In order to improve fuel economy, in recent years it has been desirable to reduce the thickness and weight of the frame. However, when simply reducing the thickness of the frame, the strength and rigidity of the frame may be reduced, stresses produced in the frame may increase, and other problems may occur. The frame must therefore be reinforced.

In the vehicle frame of JP-A-2008279959, the left and right lower frames are joined to the main pipe at substantially right angles, and loads readily concentrate at the joining parts of the main pipe and the lower frames. Reinforcing members have therefore needed to be provided to the main pipe and the lower frames. Furthermore, the cross member has needed to be provided between the left and right lower frames in order to increase the rigidity of the lower frames. Providing extra reinforcing members to the frame hampers the ability to reduce weight and is therefore not preferable.

The ability to reduce the weight of the frame without reinforcing the frame is accordingly needed.

### SUMMARY OF INVENTION

### TECHNICAL PROBLEM

It is an object of the present invention to provide a frame structure that allows reduced weight in a scooter-type vehicle without reinforcement.

### SOLUTION TO PROBLEM

That object is achieved according to the invention by a vehicle frame structure according to claim 1.

According to a first aspect of the invention, there is provided a frame structure for a scooter-type vehicle, comprising: a header pipe for steerably supporting a handle and a front fork, the handle being grasped by a driver, and the front fork being connected to the handle; a hollow main pipe extending downward from the header pipe toward the rear of the vehicle; a pair of left and right lower frames joined to a lower part of the main pipe and both extending from the lower part of the main pipe toward the rear of the vehicle; the main pipe having an expanding tube part expanding in a lateral direction at a bottom end; front-end parts of both of the left and right lower frames being joined to the expanding tube part; the lower frames comprise a front-end joining part joined to a lateral surface of the expanding tube part; a rear-end joining part joined to an end circumference of the cross pipe; and an intermediate part provided to an area between the front-end joining part and the rear-end joining part, a height of the intermediate part being smaller than a height of the rear-end joining part.

According to a second aspect of the invention, preferably, the front-end parts of the lower frames are formed to cover a lateral surface in a left-and-right direction of the expanding part.

According to a third aspect of the invention, preferably, the front-end joining part of the lower frames comprise a U-part cut out in a U-shape; and a mound-shaped bulge part formed to bulge out in a mound shape so that an upper surface of the front-end joining part protrudes upward; fitting of the U-part to the expanding tube part reducing a gap between a left distal end and a right distal end of the lower frames, and causing a welded length to be increased by the mound-shaped bulge part.

According to a fourth aspect of the invention, preferably, a stowing-part-supporting member for supporting a stowing part for stowing an object is joined to the rear-end parts of both of the left and right lower frames separately from the cross pipe, the stowing-part-supporting member being positioned over the cross pipe.

According to a fifth aspect of the invention, preferably, in a joining part of the lower frames, the cross pipe, and the rear frames, at least one part of the lower frames and at least one part of the rear frames are joined.

According to a sixth aspect of the invention, preferably, an entire circumference of the end parts of the cross pipe is joined to a laterally outer surface and a laterally inner surface of the rear-end parts of the lower frames, and is joined to a laterally outer surface and a laterally inner surface of the front-end parts of the rear frames.

According to a seventh aspect of the invention, preferably, drawing a line from a center point of a front wheel to a center of a hole in a left pivot-joining part, the front wheel being rotatably attached to a lower end of the front fork, and the left pivot-joining part being welded to the front-end part of the left rear frame in order to support an engine, and drawing a line from the center point to a center of a hole in a right pivot-joining part welded to the front-end part of the right rear frame in order to support the engine, links the left hole center, the center point of the front wheel, and the right hole center into a V-shape.

### ADVANTAGEOUS EFFECTS OF INVENTION

According to the first aspect of the invention, the main pipe includes the expanding tube part, which opens outward in the lateral direction at the bottom end. The cross-sectional area of the expanding tube part is larger than the cross-sectional area near the header-pipe connection of the main pipe, and therefore stress generated at the lower end of the main pipe is reduced. As a result, the main pipe can be made thinner and lighter. The cross-sectional area of the lower end of the main pipe is increased, and therefore the main pipe and the lower frames need not be reinforced. A frame structure that can be lightened without reinforcement can therefore be provided. The height of the intermediate part in the lower frames is made smaller than the height of the rear-end joining part.
The rear-end joining part is joined to other members, and the rigidity must therefore be increased. The height is increased, and the rigidity is increased. Increased rigidity is not necessary for the intermediate part, and the height thereof is reduced.

When the intermediate part and the rear-end joining part are made to have the same height for hypothetical purposes, the lower frames are increased in size and weight, but when the height of the intermediate part is made smaller, as in the present invention, the size and weight of the lower frames are reduced.

According to the second aspect of the invention, the front-end parts of the lower frames are formed so as to cover the lateral surfaces in the left-and-right direction of the expanding tube part.

Since the front-end parts of the lower frames are used to cover the lateral surfaces in the left-and-right direction of the expanding tube part, the cross-sectional area of the front-end parts is added to the cross-sectional area of the expanding tube part, and the rigidity of the expanding tube part can be further increased

In the invention according to claim 3, fitting the U-parts, which are cut out in a U-shape, to the expanding tube part reduces the gaps between the left and right distal ends of the lower frames and allows the welding length to be used increased by the mound-shaped bulge part, which is formed to bulge out in a mound shape.

The expanding tube part can be nearly surrounded by the front ends of the left and right lower frames. The expanding tube part is therefore reinforced by the lower frames, and a frame structure that is robust to torsion can be obtained even when the expanding tube part is thin.

According to the fourth aspect of the invention, the stowing-part-supporting member is joined to both the rear-end parts of the left and right lower frames, and, when viewed from above the vehicle, the stowing-part-supporting member is positioned over the cross pipe. Downward loads resulting from the stowing part are supported by the stowing-part-supporting member. The stowing-part-supporting member is supported by the rear-end parts of the lower frames and the cross pipe.

When the stowing-part-supporting member is supported by the intermediate parts of the lower frames or the intermediate parts of the rear frames for hypothetical purposes, the rigidity of the lower frames or the rear frames must be increased.

In the present invention, the stowing-part-supporting member is supported by the rear-end parts of the lower frames, which have increased rigidity, and the cross pipe, which has high rigidity and is reinforced by the lower frames and the rear frames. The rigidity of the cross pipe, the lower frames, and the rear frames therefore need not be further increased, and increases in the weight of these components can be limited.

According to the fifth aspect of the invention, at least one part of the lower frames and at least one part of the rear frames are joined in addition to the joining of the lower frames and the rear frames to the cross pipe.

When loads are applied to the lower frames and the rear frames, these loads are not received solely by the cross pipe but also by both the lower frames and the rear frames, and therefore loads can be prevented from concentrating excessively at the cross pipe.

According to the sixth aspect of the invention, the entire circumference of the end part of the cross pipe is joined to the outer surface and the inner surface of the rear-end part of the lower frames, and to the outer surface and the inner surface of the front-end part of the rear frames. In other words, the lower frames and the rear frames cover the entire circumference of the end part of the cross pipe and are joined to the cross pipe.

The cross pipe is reinforced by the lower frames and the rear frames, and therefore the cross pipe can be made thinner.

According to the seventh aspect of the invention, when viewed from above the vehicle, drawing a line from the center point of the front wheel to the center of the hole of the left pivot joining part, and from the center point to the center of the hole of the right pivot joining part, links the left hole center, the center point of the front wheel, and the right hole center into a V-shape, the intermediate parts of the left and right lower frames being parallel to the respective V-shaped lines.

Since the V-shaped lines are parallel to the respective intermediate parts of the lower frames, when lateral loads are applied to the vertex of the V-shape (the front-wheel center point), a tensile force acts on the intermediate part of one of the lower frames, and a compressive force acts on the intermediate part of the other lower frame. Since force is applied to the intermediate parts as an axial force along the center line of the intermediate part of the lower frame, the lower frames do not appreciably bend, and deformations of the left and right lower frames can be limited.

### BRIEF DESCRIPTION OF DRAWINGS

FIG. 1 is a left-side view of a scooter-type vehicle in which the frame structure according to the present invention is employed;
FIG. 2 is a perspective view of a vehicle frame;
FIG. 3 is an exploded perspective view exploded from the main pipe to the lower frame of the vehicle frame;
FIG. 4 is a front view of the lower part of the main pipe;
FIG. 5 is a cross-sectional view along the line 5-5 in FIG. 4;
FIG. 6 is a front view of the welded parts between the main pipe and the lower frames;
FIG. 7 is a view from the perspective of the 7 arrow in FIG. 2;
FIG. 8 is a cross-sectional view along the line 8-8 in FIG. 7;
FIG. 9 is an exploded perspective view of the vicinity of the cross pipe of the frame structure;
FIG. 10 is a view of a trial fitting of the cross pipe;
FIG. 11 is a view from the perspective of the 11 arrow in FIG. 2;
FIG. 12 is a cross-sectional view along the line 12-12 in FIG. 11;
FIG. 13 is a view from the perspective of the 13 arrow in FIG. 2;
FIG. 14 is a cross-sectional view along the line 14-14 in FIG. 11; and
FIG. 15 is a schematic diagram of the shape of the intermediate parts of the lower frames as seen from above.

### DESCRIPTION OF EMBODIMENTS

Embodiments of the present invention are described below with reference to the accompanying drawings. The drawings are to be viewed as indicated by the orientations of the signs. The terms "front," "rear," "left," "right," "up," and "down" in the descriptions below represent directions with respect to a rider sitting in the rider's seat.

### EMBODIMENTS

A scooter-type vehicle according to the present invention will be described with reference to the drawings.

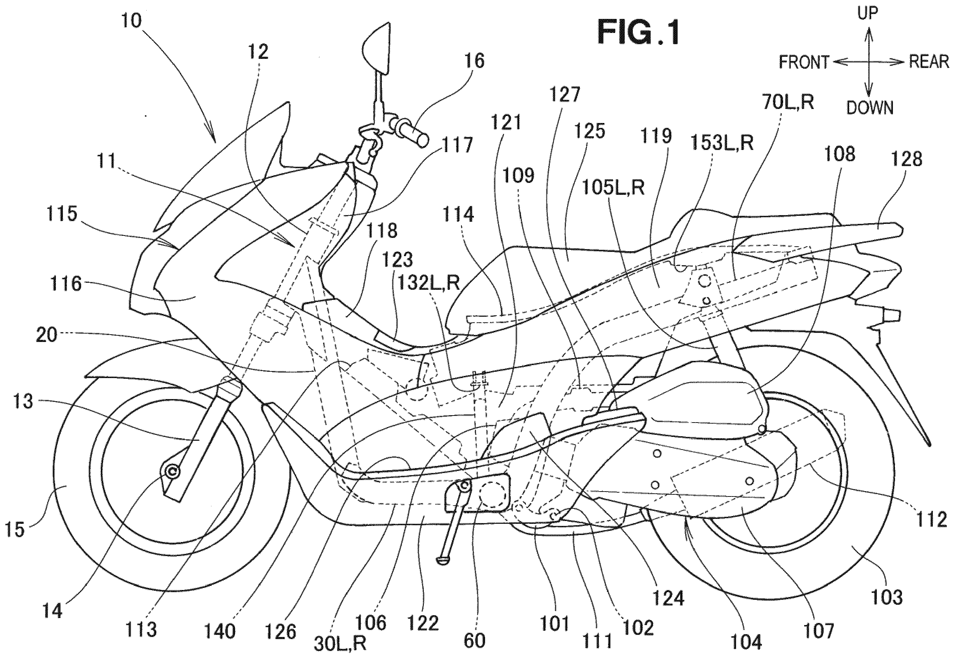

As shown in FIG. 1, a scooter-type vehicle 10 has a front fork 13 that is steerably supported by a header pipe 12 of a vehicle frame 11 (described in detail hereinafter); a front wheel 15 attached to a front axle 14 rotatably provided to the lower end of the front fork 13; handles 16 connected to the upper end of the front fork 13 for the driver to grip and steer the front wheel 15; a lower frame 30L ("L" is a suffix indicating left; cases below are identical and more detail is provided hereinafter) extending toward the rear, the front end of which is joined to the lower end of a main pipe 20 (described in detail hereinafter) that extends downward from the header pipe 12 toward the rear of the vehicle; a rear frame 70L (described in detail hereinafter) extending upward and toward the rear, the front end of which is joined to a cross pipe 60 (described in detail hereinafter) that is joined to the rear end of the lower frame 30L; a power unit 104 that doubles as a swing arm and is provided with a rear wheel 103 on the rear end, the power unit 104 being held in place by an engine hanger link 101 so as to be able to pivot via a pivot axle 102, where the engine hanger link 101 is connected to a lower part of the front end of the rear frame 70L,; and a rear cushion 105L, the lower end of which is attached to the rear end of the power unit 104, the upper end of which is supported by the rear part of the rear frame 70L, and which absorbs loads acting on the rear wheel 103.

The power unit 104 is composed of an engine 106 that is pivotably connected to the engine hanger link 101, and a transmission 107, which is formed integrally with the engine 106, transmits the power of the engine 106 to the rear wheel 103, and includes a gear-shifting mechanism.

An intake system, which has an air cleaner 108 and a carburetor 109, and an exhaust system, which has an exhaust pipe 111 and a muffler 112, are connected to the cylinder head of the engine 106.

A fuel tank 113 is positioned to the rear of the main pipe 20, and a stowing part 114 for stowing helmets and other items is positioned behind and above the fuel tank 113. The stowing part 114 is supported by the rear end of the lower frame 30L and the rear part of the rear frame 70L.

The vehicle frame 11 is covered by a vehicle cover 115. The vehicle cover 115 is composed of a front cover 116 for covering the front area of the vehicle frame 11; an upper inner cover 117 for covering the rear area of the front cover 116; a lower inner cover 118, which is provided adjoining the upper inner cover 117, for covering the upper area of the fuel tank 113; a rear cover 119, which is provided adjoining the rear end of the lower inner cover 118, for covering the lateral area of the rear part of the rear frame 70L; a middle cover 121, which is provided adjoining the lower area of the front cover 116 and the rear cover 119, for covering the lateral area of the fuel tank 113 and the engine 106; and a lower cover 122, which is provided adjoining the front cover 116 and the middle cover 121, for covering the lower and lateral areas of the lower part of the vehicle frame 11.

An oil-supply lid 123 is provided to the upper part of the lower inner cover 118 so as to be able to open and close, as well as allow attachment and detachment of the oil-supply cap of the fuel tank 113. A maintenance lid 124, which is used during maintenance, is also provided to the leftward part of the middle cover 121 so as to be able to open and close.

A seat 125, on which the driver and an accompanying passenger sit, is positioned so as to cover the stowing part 114. A step 126, where the feet of the rider are placed, is positioned below the seat 125 in the heightwise direction and between the handles 16 and the seat 125.

A pillion step 127, on which the feet of the accompanying passenger are placed, is attached behind the step 126, and a grab rail 128, which is grasped by the accompanying passenger, is provided so as to encircle the rear part of the seat 125.

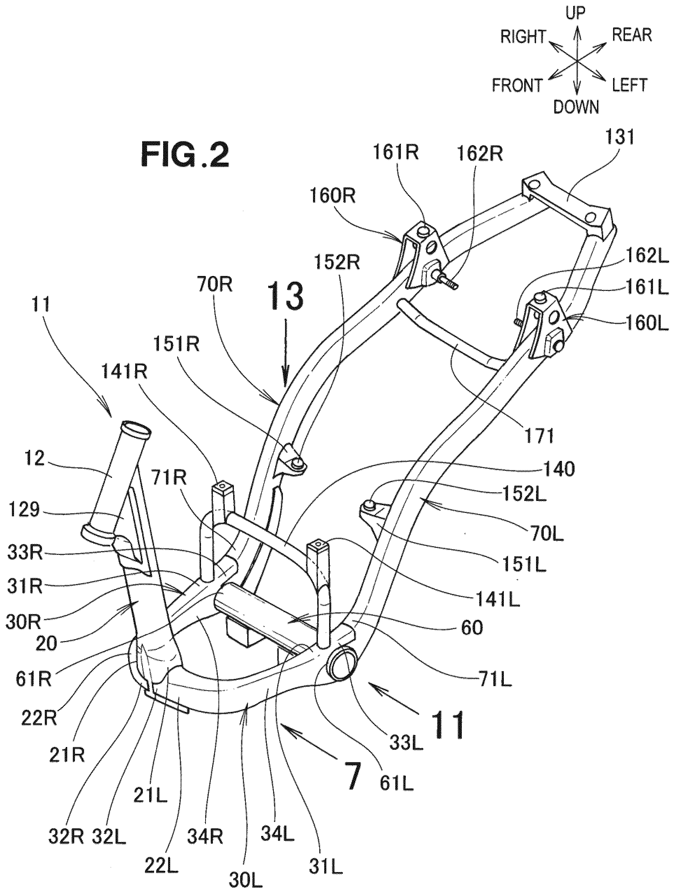

The structure of the vehicle frame 11 will be described in detail with reference to FIG. 2.

As shown in FIG. 2, the vehicle frame 11 is composed of the header pipe 12; the hollow main pipe 20, the upper-end part of which is reinforced by a reinforcing member 129 and which extends from the header pipe 12 downward toward the rear of the vehicle; a pair of left and right lower frames 30L, R ("R" is a suffix indicating right; cases below are identical) that both extend to the rear from lower-end lateral surfaces 21L, R of the main pipe 20, where front-end parts 22L, R of the lower frames are both joined to the lower-end lateral surfaces 21L, R; the cross pipe 60, which extends in a lateral direction and is joined to a rear-end part 31L of the lower frame 30L and a rear-end part 31R of the lower frame 30R; a pair of left and right rear frames 70L, R that extend upward and to the rear and are joined to the respective rear-end parts 31L, R of the lower frames 30L, R and to the cross pipe 60; and a rear cross member 131 that extends in a lateral direction and is joined to the rear end of the rear frame 70L and the rear end of the rear frame 70R.

The lower frame 30L has a front-end joining part 32L that is provided to the front-end part 22L and is joined to the lower-end lateral surface 21L of the main pipe 20; a rear-end joining part 33L that is provided to the rear-end part 31L and is joined to a front-end part 71L of the rear frame 70L and an end circumferential surface 61L of the cross pipe 60; and an intermediate part 34L provided to an area between the front-end joining part 32L and the rear-end joining part 33L. The lower frame 30R has a front-end joining part 32R that is provided to the front-end part 22R and is joined to the lower-end lateral surface 21R of the main pipe 20; a rear-end joining part 33R that is provided to the rear-end part 31R and is joined to a front-end part 71R of the rear frame 70R and an end circumferential surface 61R of the cross pipe 60; and an intermediate part 34R provided to an area between the front-end joining part 32R and the rear-end joining part 33R.

Besides the cross pipe 60, a U-shaped stowing-part-supporting member 140 for supporting the front parts (FIG. 1, signs 132L, R) of the stowing part (FIG. 1, sign 114) is also joined to the rear-end part 31L of the lower frame 30L and the rear-end part 31R of the lower frame 30R. Fastening mounts 141L, R for fastening the stowing part are provided to the upper left and right ends of the stowing-part-supporting member 140.

Stowing-part-intermediate stays 151L, R for supporting the intermediate area in the front-to-rear direction of the stowing part are further provided to respective front-part inner lateral surfaces of the rear frames 70L, R. Cushion rubber parts 152L, R are provided to respective upper surfaces of the stowing-part-intermediate stays 151L, R.

A bracket 160L for supporting the rear part (FIG. 1, sign 153L) of the stowing part is joined to the rear part of the rear frame 70L, and a bracket 160R for supporting the rear part (FIG. 1, sign 153R) of the stowing part is joined to the rear part of the rear frame 70R. Cushion rubber parts 161L, R are provided to respective upper surfaces of the brackets 160L, R. In other words, the stowing part is supported by the stowing-part-supporting member 140, the stowing-part-intermediate stays 151L, R, and the brackets 160L, R.

Since cushion bolts 162L, R for supporting the rear cushions (FIG. 1, signs 105L, R) are welded to brackets 160L, R, the brackets 160L, R double as members for supporting the rear part of the stowing part and the rear cushions.

An intermediate cross member 171 that extends in the lateral direction is joined to an intermediate part in the front-to-back direction of the rear frame 70L and an intermediate part in the front-to-back direction of the rear frame 70R.

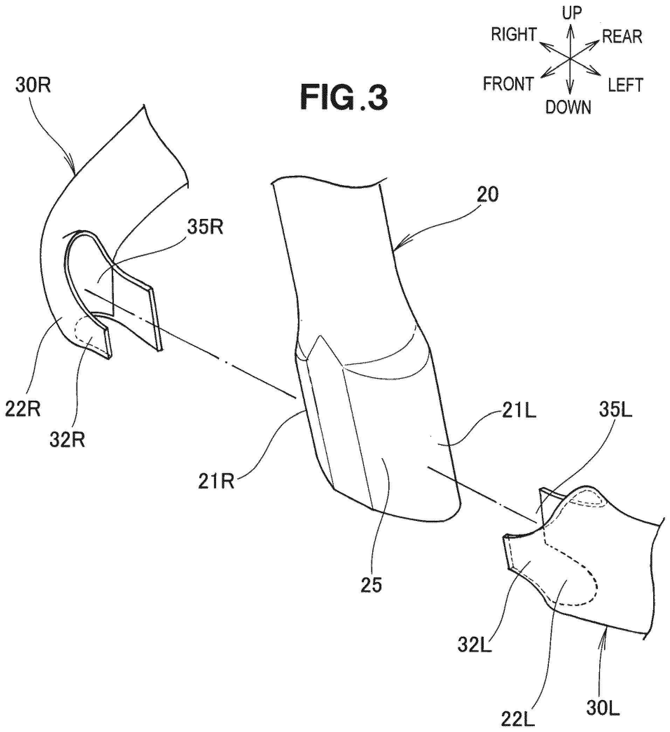

The fitting structure of the lower end of the main pipe 20 and the front-end joining parts 32L, R of the lower frames 30L, R will be described with reference to FIG. 3.

As shown in FIG. 3, a fitting-pocket part 35L for fitting to the lower-end lateral surface 21L of the main pipe 20 is formed on the front-end joining part 32L of the lower frame 30L. A fitting-pocket part 35R for fitting to the lower-end lateral surface 21R of the main pipe 20 is formed on the front-end joining part 32R of the lower frame 30R. The front-end joining parts 32L, R fit to the lower-end lateral surfaces 21L, R so that the lower-end lateral surfaces 21L, R of the main pipe 20 enter the fitting-pocket parts 35L, R.

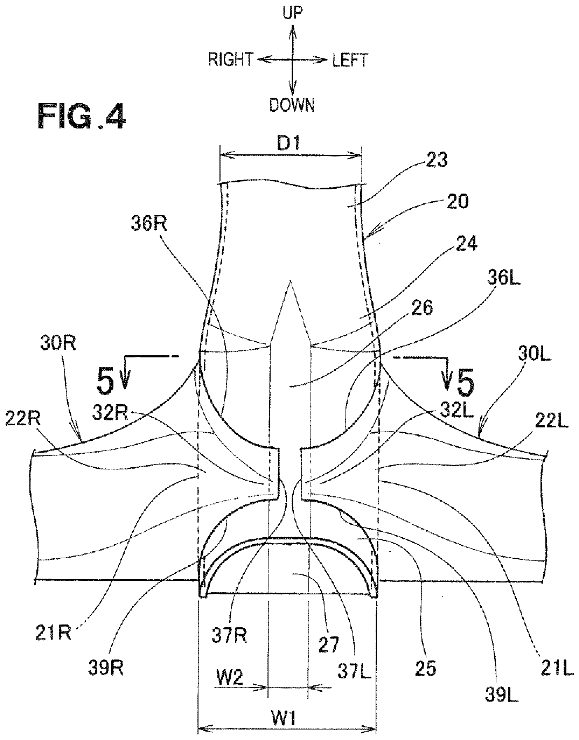

The structure of the lower end of the main pipe 20 will be described with reference to FIG. 4.

As shown in FIG. 4, the front-end joining parts 32L, R of the lower frames 30L, R are fit to the lower end of the main pipe 20. The main pipe 20 includes a straight tube part 23 that has a constant diameter D1 and is on the side joined to the header pipe (FIG. 2, sign 12); a fan-shaped pipe 24 that is provided to be continuous with the lower end of the straight tube part 23 and is formed to fan out toward bottom of the vehicle; and an expanding tube part 25 (described in detail hereinafter) that opens out in the lateral direction so as to have a width W1, which is wider than the diameter D1 of the straight tube part 23 when viewed from the front.

A front flat surface 26 (described in detail hereinafter) having a constant width W2 is also provided to the front surface of the expanding tube part 25 along the longitudinal direction of the main pipe 20. A rear flat surface 27 (described in detail hereinafter) having the constant width W2 is also provided to the rear surface of the expanding tube part 25.

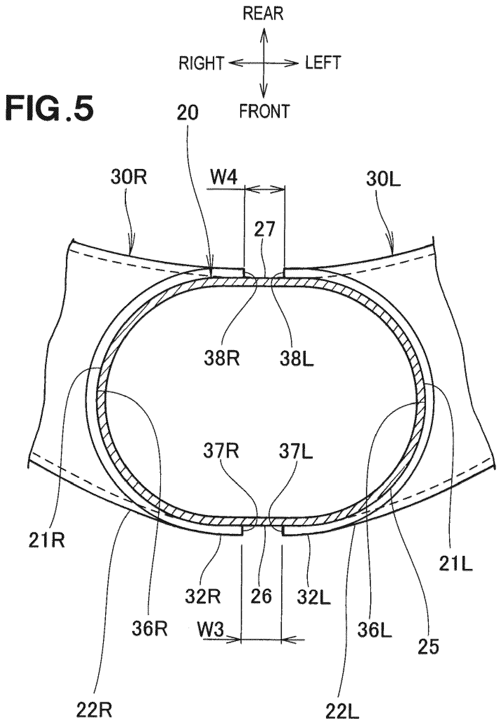

The structure of the front-end joining parts 32L, R of the lower frames 30L, R will be described with reference to FIG. 5.

As shown in FIG. 5, the main pipe 20 is formed in an oval shape (described in detail hereinafter) when viewed in cross section.

The front-end joining part 32L of the lower frame 30L has an upper U-part 36L that is cut out in a U-shape when viewed from above so as to fit to the lower-end lateral surface 21L of the main pipe 20. The front-end joining part 32R of the lower frame 30R has an upper U-part 36R that is cut out in a U-shape when viewed from above so as to fit to the lower-end lateral surface 21R of the main pipe 20.

The fitting of the upper U-parts 36L, R to the expanding tube part 25 reduces a gap W3 between a front distal end 37L of the lower frame 30L and a front distal end 37R of the lower frame 30R, and a gap W4 between a rear distal end 38L of the lower frame 30L and a rear distal end 38R of the lower frame 30R.

In FIG. 4, the lower frame 30L also includes a lower U-part 39L provided to be continuous with the lower end of the front distal end 37L. The lower frame 30R also includes a lower U-part 39R provided to be continuous with the lower end of the front distal end 37R.

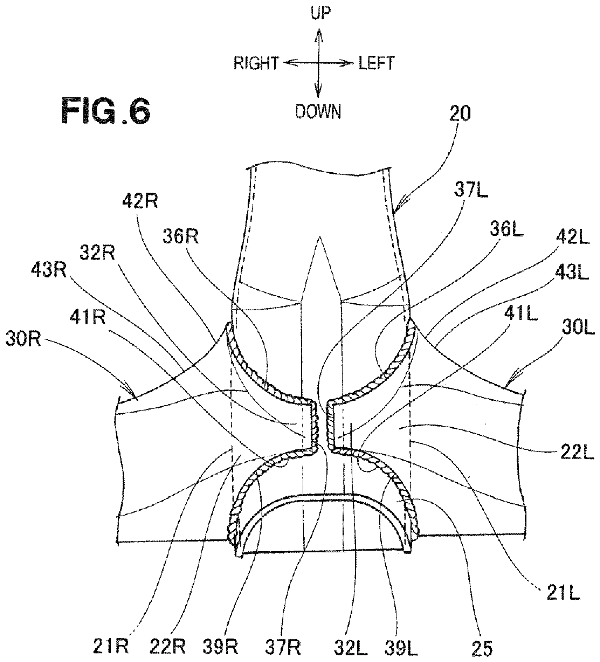

The welded parts of the expanding tube part 25 of the main pipe 20 and the front-end joining parts 32L, R of the lower frames 30L, R are described with reference to FIG. 6.

As shown in FIG. 6, fillet welding is performed between the lower-end lateral surface 21L of the expanding tube part 25 and the upper U-part 36L of the front-end joining part 32L, the front distal end 37L, and the lower U-part 39L, and a front welded part 41L is formed. Fillet welding is performed between the lower-end lateral surface 21R of the expanding tube part 25 and the upper U-part 36R of the front-end joining part 32R, the front distal end 37R, and the lower U-part 39R, and a front welded part 41R is formed. In other words, the front-end joining parts 32L, R are welded to the lower-end lateral surfaces 21L, R of the expanding tube part 25.

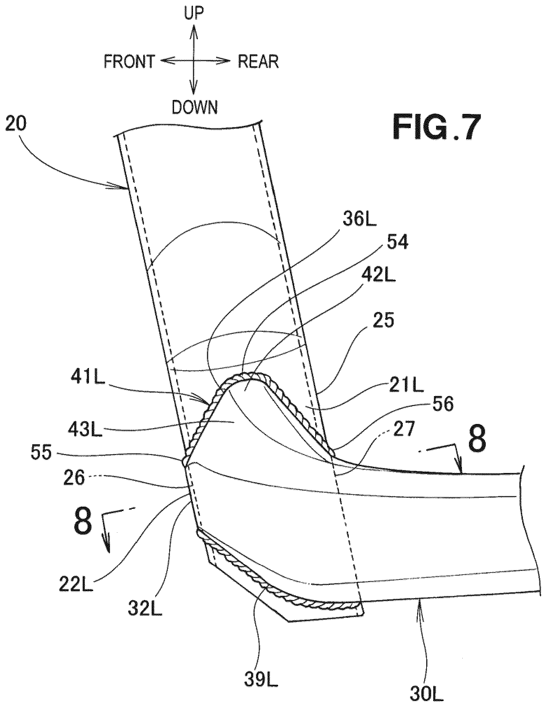

The shape of the front-end joining part 32L when viewed from the left will be described with reference to FIG. 7.

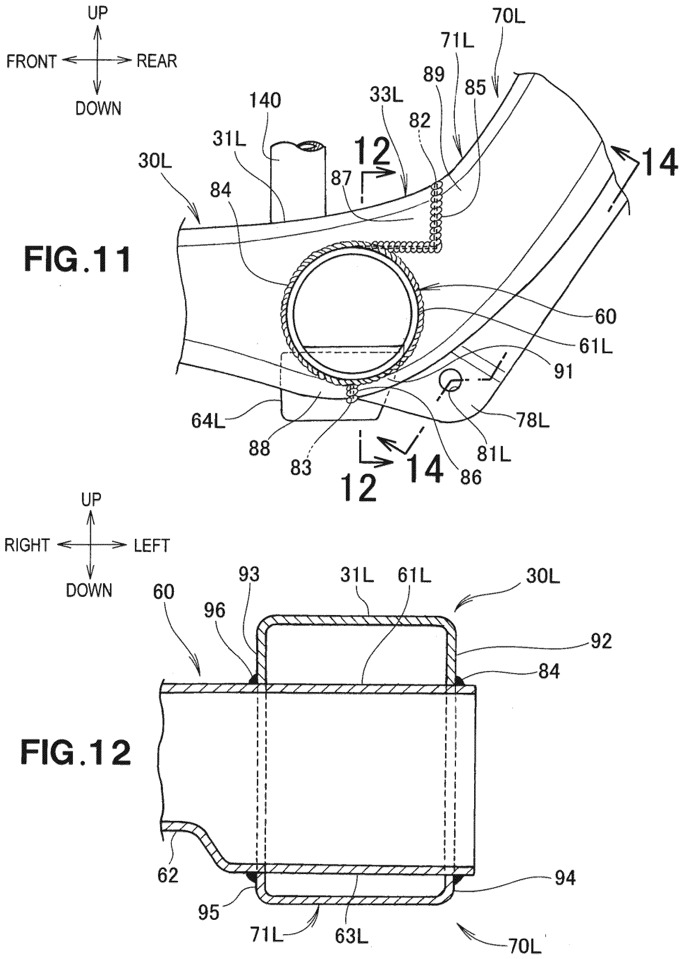

As shown in FIG. 7, when viewed from the side of the vehicle, the front-end joining part 32L has a mound-shaped bulge part 43L that is formed to bulge out in a mound shape so that an upper surface 42L protrudes upward. The mound-shaped bulge part 43L prolongs the welding length of the front welded part 41L, causes a front-to-back center part 54 of the front welded part 41L to lean more toward the header pipe (FIG. 12, sign 12), and causes a front-end part 55 and a rear-end part 56 of the front welded part 41L to be lower than the front-to-back center part 54.

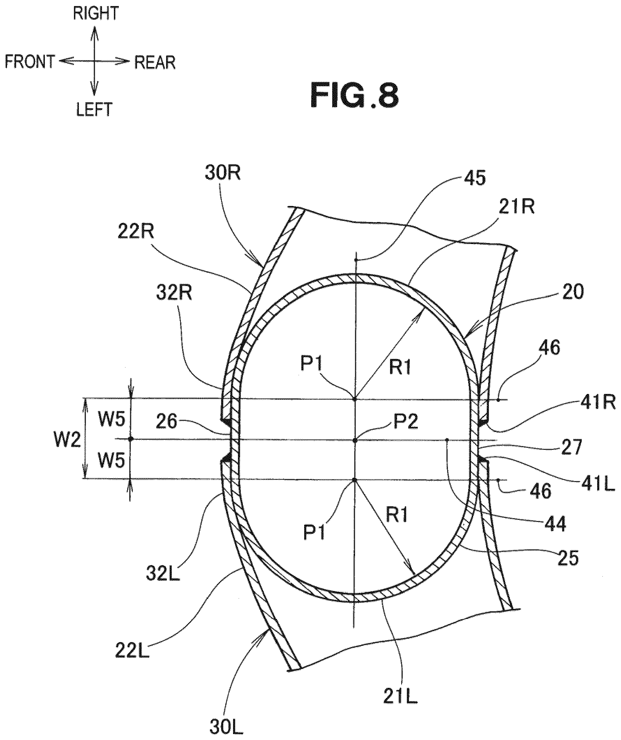

The front flat surface 26 and the rear flat surface 27 provided to the expanding tube part 25 of the main pipe 20 will be described with reference to FIG. 8.

As shown in FIG. 8, the front flat surface 26 and the rear flat surface 27 of the expanding tube part 25 are joined to the front-end joining parts 32L, R of the lower frames 30L, R by the welded parts 41R, L.

The cross-sectional shape of the expanding tube part 25 will be described next.

When the width W2 of the front flat surface 26 and the rear flat surface 27 is divided in two equal parts with reference to a lateral center line 44 of the expanding tube part 25, a width W5 is obtained. The intersections of a front-to-back center line 45 of the expanding tube part 25 and lines 46 at the width W2 are P1. When semicircles having a radius R1 are drawn with reference to the intersections P1, the radii are those of the lower-end lateral surfaces 21L, R of the expanding tube part 25. In other words, the expanding tube part 25 is an oval configured about a point P2 using the width W5 and the radius R1. The expanding tube part 25 is preferably formed in an oval shape but may also be formed in an ellipse shape.

The front-end part 22L of the lower frame 30L is formed so as to cover the lateral surface 21L in the left-and-right direction of the expanding tube part 25, and the front-end part 22R of the lower frame 30R is formed so as to cover the lateral surface 21R in the left-and-right direction of the expanding tube part 25.

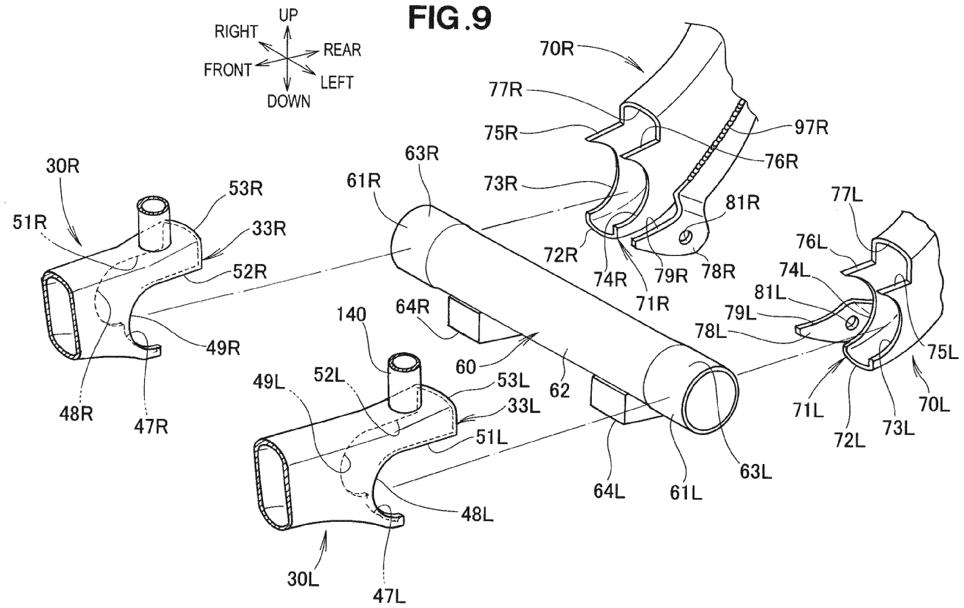

The structure of the rear-end joining parts 33L, R of the lower frames 30L, R, the cross pipe 60, and the front-end parts 71L, R of the rear frames 70L, R will be described with reference to FIG. 9.

As shown in FIG. 9, the rear-end joining part 33L of the lower frame 30L is composed of a lower-end groove surface 47L provided to the lower end and constituting a lower end and a groove of the front-end part 71L of the rear frame 70L; an outer fitting surface 48L and an inner fitting surface 49L formed in a semicircular shape continuous with the upper area of the groove surface 47L and fitted to the end circumferential surface 61L of the cross pipe 60; an outer longitudinal groove surface 51L and an inner longitudinal groove surface 52L that are provided continuously with the respective rear areas of the fitting surfaces 48L, 49L and constitute a longitudinal region and a groove of the front-end part 71L; and an upper-end groove surface 53L that is provided continuously with the rear area of the groove surfaces 51L, 52L and constitutes an upper surface and a groove of the front-end part 71L.

The rear-end joining part 33R of the lower frame 30R is composed of a lower-end groove surface 47R provided to the lower end and constituting a lower end and a groove of the front-end part 71R of the rear frame 70R; an outer fitting surface 48R and an inner fitting surface 49R that are formed in a semicircular shape continuous with the upper area of the groove surface 47R and fitted to the end circumferential surface 61R; an outer longitudinal groove surface 51R and an inner longitudinal groove surface 52R that are provided continuously with the respective rear areas of the fitting surfaces 48R, 49R and constitute a longitudinal region and a groove of the front-end part 71R; and an upper-end groove surface 53R that is provided continuously with the rear area of the groove surfaces 51R, 52R and constitutes an upper surface and a groove of the front-end part 71R.

The structure of the cross pipe 60 will be described next.

The cross pipe 60 is composed of a center part 62 that is positioned in the lateral center of the vehicle and extends in the lateral direction; an end part 63L provided to the left end of the center part 62 and including the outer circumferential surface 61L; and an end part 63R provided to the right end of the center part 62 and including the outer circumferential surface 61R. Link stoppers 64L, R are also provided to the left-end part and the right-end part of the center part 62.

The structure of the front-end parts 71L, R of the rear frames 70L, R will be described next.

The front-end part 71L of the rear frame 70L is composed of a lower-end groove surface 72L provided to the lower end and constituting the lower-end groove surface 47L and a groove of the rear-end joining part 33L; an outer fitting surface 73L and an inner fitting surface 74L that are formed in a semicircular shape continuous with the upper area of the groove surface 72L and fitted to the end circumferential surface 61L of the cross pipe 60; an outer longitudinal groove surface 75L and an inner longitudinal groove surface 76L provided continuously with the respective rear areas of the fitting surfaces 73L, 74L and constituting the groove surfaces 51L, 52L and a groove; and an upper-end groove surface 77L provided continuously with the rear area of the groove surfaces 75L, 76L and constituting the upper-end groove surface 53L and a groove.

The rear-end part 71R of the rear frame 70R is composed of a lower-end groove surface 72R provided to the lower end and constituting the lower-end groove surface 47R and a groove of the of the rear-end joining part 33R; an outer fitting surface 73R and an inner fitting surface 74R formed in a semicircular shape continuous with the upper area of the groove surface 72R and fitted to the end circumferential surface 61R of the cross pipe 60; an outer longitudinal groove surface 75R and an inner longitudinal groove surface 76R provided continuously with the respective rear areas of the fitting surfaces 73R, 74R and constituting the groove surfaces 51R, 52R and a groove; and an upper-end groove surface 77R that is provided continuously with the rear area of the groove surfaces 75R, 76R and constitutes the upper-end groove surface 53R and a groove.

Pivot joining parts 78L, R for supporting the front end of the power unit (FIG. 1, sign 104) via the engine hanger link (FIG. 1, sign 101) are welded to the inside of the respective front end parts of the rear frames 70L, R.

An engaging part 79L for engaging with the center part 62 of the cross pipe 60 is provided to the front end of the pivot joining part 78L, and a bolt-inserting hole 81L for insertion of a bolt for holding the engine hanger link in place is provided to a lateral part of the front end of the pivot joining part 78L. An engaging part 79R for engaging with the center part 62 is provided to the front end of the pivot joining part 78R, and a bolt-inserting hole 81R for insertion of a bolt for holding the engine hanger link in place is provided to a lateral part of the front end of the pivot joining part 78R.

The fitting structure of the rear-end joining parts 33L, R, the cross pipe 60, and the front-end parts 71L, R will be described next.

The fitting surfaces 48L, 49L of the rear-end joining part 33L and the fitting surfaces 73L, 74L of the front-end part 71L are fit to the end circumferential surface 61L of the cross pipe 60. The fitting surfaces 48R, 49R of the rear-end joining part 33R and the fitting surfaces 73R, 74R of the front-end part 71R are fit to the end circumferential surface 61R of the cross pipe 60.

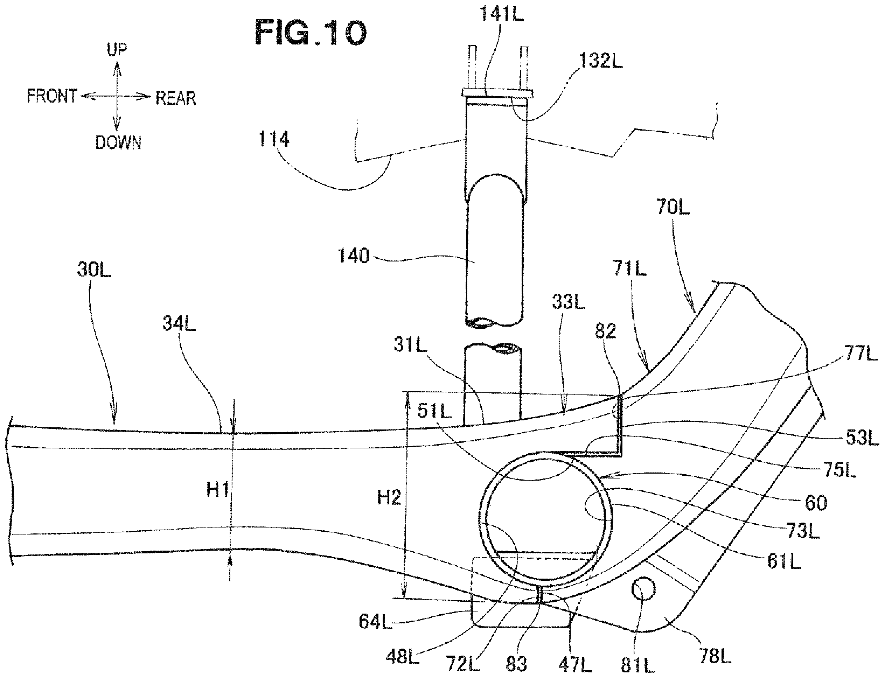

The groove configured by the rear-end joining part 33L of the lower frame 30L and the front-end part 71L of the rear frame 70L, as well as the height of the lower frame 30L, will be described with reference to FIG. 10.

As shown in FIG. 10, the fitting surface 48L of the rear-end joining part 33L and the fitting surface 73L of the front-end part 71L fit in the end circumferential surface 61L of the cross pipe 60.

An upper groove 82 formed by a fixed root gap is provided to the upper area of the cross pipe 60, and a lower groove 83 formed by a fixed root gap is provided to the lower area of the cross pipe 60. The positions of the grooves 82, 83 given in this embodiment as viewed from the side of the vehicle are simply a single example, and modifications to other positions are permissible.

The height of the lower frame 30L will be described next.

When viewed from the side of the vehicle, a height H1 of the intermediate part 34L of the lower frame 30L is smaller than a height H2 of the rear-end joining part 33L.

The welded parts of the lower frame 30L, the cross pipe 60, and the rear frame 70L will be described with reference to FIG. 11.

As shown in FIG. 11, fillet welding is performed between the end circumferential part 61L of the cross pipe 60 and both the rear-end joining part 33L of the lower frame 30L and the front-end part 71L of the rear frame 70L, and an outer girth-welded part 84 is formed. Butt welding is performed on the upper groove 82, and an upper welded part 85 is formed. Butt welding is further performed on the lower groove 83, and a lower welded part 86 is formed.

Specifically, the joined parts of the lower frame 30L, the cross pipe 60, and the rear frame 70L result from joining an upper part 87 and a lower part 88 of the rear-end joining part 33L of the lower frame 30L with an upper part 89 and a lower part 91 of the front-end part 71L of the rear frame 70L, in addition to using welding to join the lower frame 30L and the rear frame 70L to the cross pipe 60. In this embodiment, the upper part 87 and the lower part 88 of the rear-end joining part 33L are joined to the upper part 89 and the lower part 91 of the front-end part 71L, but only the upper part 87 of the rear-end joining part 33L and the upper part 89 of the front-end part 71L, or only the lower part 88 of the rear-end joining part 33L and the lower part 91 of the front-end part 71L may also be joined.

The girth-welded parts created between the cross pipe 60, the lower frame 30L, and the rear frame 70L will be described with reference to FIG. 12.

As shown in FIG. 12, the entire circumference of the end part 63L of the cross pipe 60 is joined by welding to a lateral outer surface 92 and an inner surface 93 of the rear-end part 31L of the lower frame 30L, as well as to a lateral outer surface 94 and an inner surface 95 of the front-end part 71L. The outer girth-welded part 84 is formed at the outer surfaces 92, 94, and an inner girth-welded part 96 is formed at the inner surfaces 93, 95.

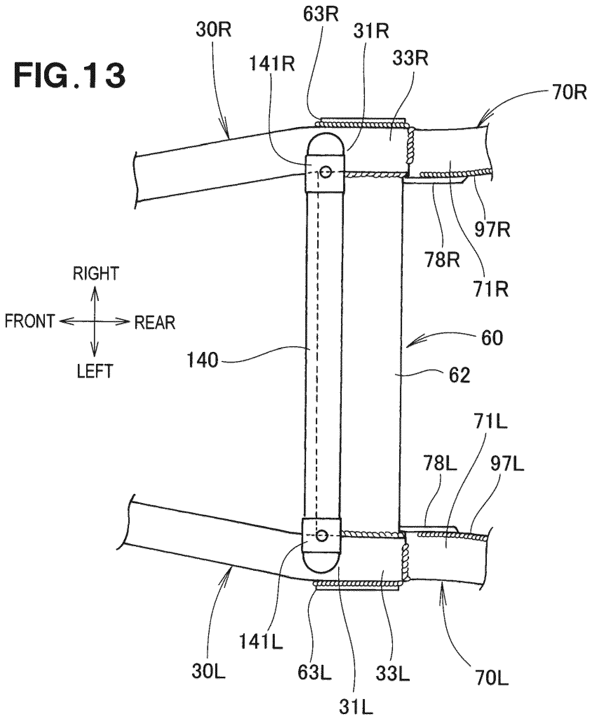

Positioning on the surface of the stowing-part-supporting member 140 and the joining structure of the lower frames 30L, R and the pivot joining parts 78L, R will be described with reference to FIG. 13.

As shown in FIG. 13, the stowing-part-supporting member 140 is positioned so as to cover the cross pipe 60 when viewed from above the vehicle.

The pivot joining part 78L is joined to an inner surface of the lower frame 30L by a welded part 97L, and the pivot joining part 78R is joined to an inner surface of the lower frame 30R by a welded part 97R.

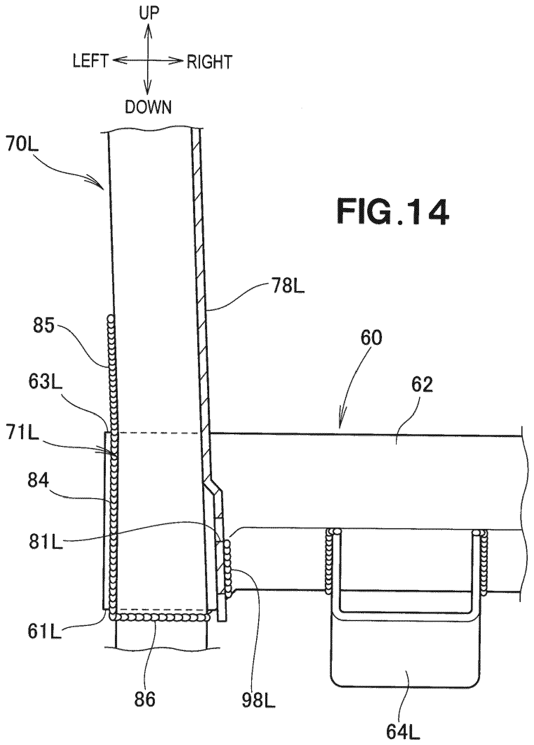

The structure for joining the cross pipe 60 and the pivot joining part 78L will be described with reference to FIG. 14.

As shown in FIG. 14, fillet welding is performed between the lower part of the pivot joining part 78L and the center part 62 of the cross pipe 60, and a welded part 98L is formed. In other words, the pivot joining part 78L is also welded to the outer circumferential surface 61L of the cross pipe 60 in addition to being welded to the inside of the front-end part (FIG. 13, sign 71L) of the rear frame 70L.

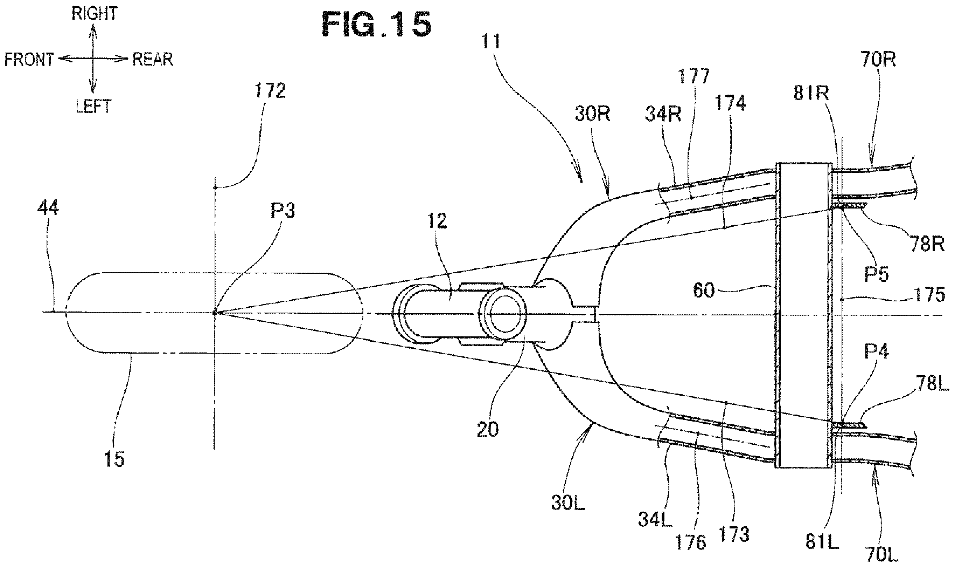

The shape of the intermediate parts 34L, R of lower frames 30L, R as viewed from above will be described with reference to FIG. 15.

As shown in FIG. 15, when viewed from above the vehicle, a line 173 is drawn from a front-wheel center point P3, which is at the intersection between a center line 172 of the front wheel (FIG. 1, sign 14) and the lateral center line 44, to a center point P4 of the hole 81L of the pivot joining part 78L, and a line 174 is drawn from the center point P3 to a center point P5 of the hole 81R of the pivot joining part 78R.

The line 173 links the points P3, P4, and the line 174 links the points P3, P5, whereby the center point P4 of the hole 81L of the pivot joining part 78L, the front-wheel center point P3, and the center point P5 of the hole 81R of the pivot joining part 78R are linked in a V-shape. The V-shaped lines 173, 174 are parallel to the respective intermediate parts 34L, R of the lower frames 30L, R.

The operational effects of the scooter-type vehicle 10 above will be described below.

According to the configuration of FIG. 11, the parts 87, 88 of the lower frame 30L and the parts 89, 91 of the rear frame 70L are joined in addition to the joining of the lower frame 30L and the rear frame 70L to the cross pipe 60. When loads are applied to the lower frame 30L and the rear frame 70L, these loads are not received solely by the cross pipe 60 but also by both the lower frame 30L and the rear frame 70L, and therefore loads can be prevented from concentrating excessively at the cross pipe 60.

According to the configuration of FIG. 12, the entire circumference of the end part 63L of the cross pipe 60 is joined to the outer surface 92 and the inner surface 93 of the rear-end part 31L of the lower frame 30L, and to the outer surface 94 and the inner surface 95 of the front-end part 71L of the rear frame 70L. In other words, the lower frame 30L and the rear frame 70L cover the entire circumference of the end part 63L of the cross pipe 60 and are joined to the cross pipe 60.

The cross pipe 60 is reinforced by the lower frame 30L and the rear frame 70L, and therefore the cross pipe 60 can be made thinner.

According to the configuration of FIG. 10, the height H1 of the intermediate part 34L in the lower frame 30L is made smaller than the height H2 of the rear-end joining part 33L.

The rear-end joining part 33L is joined to other members, and the rigidity must therefore be increased. The height H2 is increased, and the rigidity is increased. Increased rigidity is not necessary for the intermediate part 34L, and the height H1 thereof is reduced.

When the intermediate part 34L and the rear-end joining part 33L are made to have the same height for hypothetical purposes, the lower frame 30L is increased in size and weight, but when the height H1 of the intermediate part 34L is made smaller, as in the present invention, the size and weight of the lower frame 30L are reduced.

According to the configuration of FIG. 13, the stowing-part-supporting member 140 is joined to both the rear-end parts 31L, R of the lower frames 30L, R, and, when viewed from above the vehicle, the stowing-part-supporting member 140 is positioned over the cross pipe 60.

Downward loads resulting from the stowing part are supported by the stowing-part-supporting member 140. The stowing-part-supporting member 140 is supported by the rear-end parts 31L, R of the lower frames 30L, R and the cross pipe 60. When the stowing-part-supporting member 140 is supported by the intermediate parts of the lower frames 30L, R or the intermediate parts of the rear frames 70L, R for hypothetical purposes, the rigidity of the lower frames 30L, R or the rear frames 70L, R must be increased.

In the present invention, the stowing-part-supporting member 140 is supported by the rear-end parts 31L, R of the lower frames 30L, R, which have increased rigidity, and the cross pipe 60, which has high rigidity and is reinforced by the lower frames 30L, R and the rear frames 70L, R. The rigidity of the cross pipe 60, the lower frames 30L, R, and the rear frames 70L, R therefore need not be further increased, and increases in the weight of these components can be limited.

According to the configuration of FIG. 4, the main pipe 20 includes the expanding tube part 25, which opens outward in the lateral direction at the bottom end. Additionally, according to the configuration of FIG. 8, the front-end parts 22L, R of the left and right lower frames 30L, R are both joined to the expanding tube part 25.

The cross-sectional area of the expanding tube part 25 is larger than the cross-sectional area near the header-pipe connection of the main pipe 20, and therefore stress generated at the lower end of the main pipe 20 is reduced. As a result, the main pipe 20 can be made thinner and lighter. The cross-sectional area of the lower end of the main pipe 20 is increased, and therefore the main pipe 20 and the lower frames 30L, R need not be reinforced. A frame structure that can be lightened without reinforcement can therefore be provided.

According to the configuration of FIG. 15, when viewed from above the vehicle, drawing the line 173 from the center point P3 of the front wheel 15 to the hole center P4 of the left pivot joining part 78L, and the line 174 from the center point P3 to the hole center P5 of the right pivot joining part 78R links the left hole center P4, the center point P3 of the front wheel, and the right hole center P5 into a V-shape, the intermediate parts 34L, R of the left and right lower frames 30L, R being parallel to the respective V-shaped lines 173, 174.

Since the V-shaped lines 173, 174 are parallel to the respective intermediate parts 34L, R of the lower frames 30L, R, when lateral loads are applied to the vertex of the V-shape (the front-wheel center point P3), a tensile force acts on the intermediate part 34L of the lower frame 30L on the one hand, and a compressive force acts on the intermediate part 34R of the lower frame 30R on the other. Since force is applied to the intermediate part 34L as an axial force along a center line 176 of the intermediate part 34L of the lower frame 30L and to the intermediate part 34R as an axial force along a center line 177 of the intermediate part 34R of the lower frame 30R, the lower frames 30L, R do not appreciably bend, and deformations of the left and right lower frames 30L, R can be limited.

According to the configuration of FIG. 8, the front-end part 22L of the lower frame 30L is formed so as to cover the lateral surface 21L in the left-and-right direction of the expanding tube part 25, and the front-end part 22R of the lower frame 30R is formed so as to cover the lateral surface 21R in the left-and-right direction of the expanding tube part 25.

Since the front-end parts 22L, R of the lower frames 30L, R are used to cover the lateral surfaces 21L, R in the left-and-right direction of the expanding tube part 25, the cross-sectional area of the front-end parts 22L, R is added to the cross-sectional area of the expanding tube part 25, and the rigidity of the expanding tube part 25 can be further increased.

According to the configuration shown in FIG. 13, the cross pipe 60 is joined to both of the rear-end parts 31L, R of the lower frames 30L, R, and the front-end parts 71L, R of the pair of the rear frames 70L, R are joined respectively to the end parts 63L, R of the cross pipe 60.

The cross pipe 60 is provided to the area between the lower frame 30L and the rear frame 70L and between the lower frame 30R and the rear frame 70R, and the rigidity of the entire frame therefore increases.

As shown in FIG. 5, fitting the upper U-parts 36L, R, which are cut out in a U-shape, to the expanding tube part 25 reduces the gaps W3, W4 between the distal ends 37L, 38L of the lower frame 30L and the distal ends 37R, 38R of the lower frame 30R. As shown in FIG. 7, the mound-shaped bulge part 43L, which is formed to bulge out in a mound shape, prolongs the welding length of the front welded part 41L.

The expanding tube part 25 can be nearly surrounded by the front-end parts 22L, R of the lower frames 30L, R. The expanding tube part 25 is therefore reinforced by the lower frames 30L, R, and a frame structure that is robust to torsion can be obtained even when the expanding tube part 25 is thin.

The thickness of the lower frames 30R, L and the rear frames 70R, L in FIG. 2 is usually 2.0 to 3.0 mm, but applying the joining structure given in the embodiment allows the thickness to be 1.0 to 2.0 mm.

### INDUSTRIAL APPLICABILITY

The frame structure of the present invention is ideal for a scooter-type vehicle.

### REFERENCE SIGNS LIST

- 10:: Scooter-type vehicle
- 11:: Vehicle frame
- 12:: Header pipe
- 13:: Front fork
- 15:: Front wheel
- 16:: Handles
- 20:: Main pipe
- 21L, 21R:: Left and right lateral surfaces
- 22L, 22R:: Front-end parts
- 25:: Expanding tube part
- 30L, 30R:: Lower frames
- 31L, 31R:: Rear-end parts
- 32L, 32R:: Front-end joining parts
- 33L, 33R:: Rear-end joining parts
- 34L, 34R:: Intermediate parts
- 36L, 36R:: U-parts
- 37L, 37R:: Distal ends
- 42L, 42R:: Upper surfaces
- 43L, 43R:: Mound-shaped bulge parts
- 44:: Lateral center
- 60:: Cross pipe
- 61L, 61R:: End circumferences (end circumferential surfaces)
- 63L, 63R:: Left and right end parts
- 70L, 70R:: Rear frames
- 71L, 71R:: Front-end parts
- 78L, 78R:: Pivot joining parts
- 87, 89:: Parts (upper parts)
- 88, 91:: Parts (lower parts)
- 92, 94:: Outer surfaces
- 93, 95:: Inner surfaces
- 106:: Engine
- 114:: Stowing part
- 140:: Stowing-part-supporting member
- 173, 174:: Lines
- HI, H2:: Heights
- P3:: Center point
- P4, P5:: Hole centers
- W3:: Gap

## Claims

1. A frame structure for a scooter-type vehicle, comprising:
a header pipe (12) for steerably supporting a handle (16) and a front fork (13), the handle (16) being grasped by a driver, and the front fork (13) being connected to the handle (16);
a hollow main pipe (20) extending downward from the header pipe (12) toward the rear of the vehicle;
a pair of left and right lower frames (30L, 30R) joined to a lower part of the main pipe (20) and both extending from the lower part of the main pipe (20) toward the rear of the vehicle;
front-end parts (22L, 22R) of both of the left and right lower frames (30L, 30R) being joined to the lower part of the main pipe (20);
a cross pipe (60) extending in a lateral direction is joined to both rear-end parts (31L, 31R) of the left and right lower frames (30L, 30R); and
front-end parts (71L, 71R) of a pair of left and right rear frames (70L, 70R) extending upward and to the rear of the vehicle being joined to respective left and right end parts (63L, 63R) of the cross pipe (60),
**characterized in that** the main pipe (20) has an expanding tube part (25) expanding in a lateral direction at a bottom end, and
each of the left and right lower frames (30L, 30R) comprises:
a front-end joining part (32L, 32R) joined to a left or a right lateral surface (21L, 21R) of the expanding tube part (25)
a rear-end joining part (33L, 33R) joined to a left or a right end circumference (61L, 61R) of the cross pipe (60); and
an intermediate part (34L, 34R) provided to an area between the front-end joining part (32L, 32R) and the rear-end joining part (33L, 33R),
wherein a height (H1) of the intermediate part (34L, 34R) is smaller than a height (H2) of the rear-end joining part (33L, 33R).

2. The frame structure for a scooter-type vehicle according to claim 1, wherein the front-end parts (22L, 22R) of the lower frames (30L, 30R) are formed to cover the left and right lateral surfaces (21L, 21R) of the expanding part (25).

3. The frame structure for a scooter-type vehicle according to claim 1 or 2, wherein the front-end joining part (32L, 32R) of the lower frames (30L, 30R) comprises:
a U-part (36L, 36R) cut out in a U-shape; and
a mound-shaped bulge part (43L, 43R) formed to bulge out in a mound shape so that an upper surface (42L, 42R) of the front-end joining part (32L, 32R) protrudes upward, fitting of the U-part (36L, 36R) to the expanding tube part (25) reducing a gap (W3) between a left distal end (37L) and a right distal end (37R) of the lower frames (30L. 30R), and causing a welded length to be used effectively by the mound-shaped bulge part (43L, 43R).

4. The frame structure for a scooter-type vehicle according to any one of claims 1 to 3, wherein a stowing-part-supporting member (140) for supporting a stowing part (114) for stowing an object is joined to the rear-end parts (31L, 31R) of both of the left and right lower frames (30L, 30R) separately from the cross pipe (60), the stowing-part-supporting member (140) being positioned over the cross pipe (60).

5. The frame structure for a scooter-type vehicle according to any one of claims 1 to 4, wherein in a joining part of the lower frames (30L, 30R), the cross pipe (60), and the rear frames (70L, 70R), at least one part (87, 88) of the lower frames (30L, 30R) and at least one part (89, 91) of the rear frames (70L, 70R) are joined.

6. The frame structure for a scooter-type vehicle according to any one of claims 1 to 5, wherein an entire circumference of the end parts (63L) of the cross pipe (60) is joined to a laterally outer surface (92) and a laterally inner surface (93) of the rear-end parts (31L, 31R) of the lower frames (30L, 30R), and is joined to a laterally outer surface (94) and a laterally inner surface (95) of the front-end parts (71L, 71R) of the rear frames (70L, 70R).

7. The frame structure for a scooter-type vehicle according to any one of claims 1 to 6, wherein
drawing a line (173) from a center point (P3) of a front wheel (15) to a center (P4) of a hole in a left pivot-joining part (78L), the front wheel (15) being rotatably attached to a lower end of the front fork (13), and the left pivot-joining part (78L) being welded to the front-end part (71L) of the left rear frame (70L) in order to support an engine (106), and
drawing a line (174) from the center point (P3) to a center (P5) of a hole in a right pivot-joining part (78R) welded to the front-end part (71R) of the right rear frame (70R) in order to support the engine (106), links
the left hole center (P4), the center point (P3) of the front wheel (15), and the right hole center (P5) into a V-shape;
the intermediate parts (34L, 34R) of the left and right lower frames (30L, 30R) being parallel to the lines (173, 174) of the V-shape.

## Patentansprüche

1. Rahmenstruktur für einen Motorroller-Typ-Fahrzeug, mit:
einem Grundrohr (12) zum lenkbaren Stützen eines Griffs (16) und einer Vordergabel (13), wobei der Griff (16) von einem Fahrer ergriffen wird und die Vordergabel (13) mit dem Griff (16) verbunden ist;
einem hohlen Hauptrohr (20), das sich von dem Grundrohr (12) nach unten in Richtung zu dem hinteren Teil des Fahrzeugs erstreckt;
einem Paar von linken und rechten unteren Rahmen (30L, 30R), die mit einem unteren Teil des Hauptrohrs (20) verbunden sind und die sich beide von dem unteren Teil des Hauptrohrs (20) in Richtung zu dem hinteren Teil des Fahrzeugs erstrecken;
Vorderes-Ende-Teilen (22L, 22R) von sowohl dem linken als auch dem rechten unteren Rahmen (30L, 30R), die mit dem unteren Teil des Hauptrohrs (20) verbunden sind;
einem Querrohr (60), das sich in einer Querrichtung erstreckt, das mit beiden Hinteres-Ende-Teilen (31L, 31R) des linken und rechten unteren Rahmens (30L, 30R) verbunden ist; und
Vorderes-Ende-Teilen (71L, 71R) eines Paars von linken und rechten hinteren Rahmen (70L, 70R), die sich nach oben und zu dem hinteren Teil des Fahrzeugs erstrecken, die mit entsprechenden linken und rechten Endteilen (63L, 63R) des Querrohrs (60) verbunden sind;
**dadurch gekennzeichnet, dass** das Hauptrohr (20) einen sich aufweitenden Leitungsteil (25) aufweist, der sich an einem unteren Ende in einer Querrichtung aufweitet, und
jeder des linken und rechten unteren Rahmens (30L, 30R) aufweist:
ein Vorderes-Ende-Verbindungsteil (32L, 32R), das mit einer linken oder einer rechten Querfläche (21L, 21R) des sich aufweitenden Leitungsteils (25) verbunden ist,
ein Hinteres-Ende-Verbindungsteil (33L, 33R), das mit einem linken oder einem rechten Endumfang (61L, 61R) des Querrohrs (60) verbunden ist; und
einen Zwischenteil (34L, 34R), der an einem Gebiet zwischen dem Vorderes-Ende-Verbindungsteil (32L, 32R) und dem Hinteres-Ende-Verbindungsteil (33L, 33R) vorgesehen ist;
bei der eine Höhe (H1) des Zwischenteils (34L, 34R) kleiner ist als eine Höhe (H2) des Hinteres-Ende-Verbindungsteils (33L, 33R).

2. Rahmenstruktur für ein Motorroller-Typ-Fahrzeug nach Anspruch 1, bei der die Vorderes-Ende-Teile (22L, 22R) des unteren Rahmens (30L, 30R) zum Bedecken der linken und rechten Querflächen (21L, 21R) des sich aufweitenden Teils (25) ausgebildet sind.

3. Rahmenstruktur für ein Motorroller-Typ-Fahrzeug nach Anspruch 1 oder 2, bei der der Vorderes-Ende-Verbindungsteil (32 L, 32R) des unteren Rahmens (30L, 30R) aufweist:
einen U-Teil (36L, 36R), der in einer U-Form ausgeschnitten ist; und
einen buckelförmigen Aufwölbungsteil (43L, 43R), der zum Aufwölben in eine Buckelform geformt ist, so dass eine obere Fläche (42L, 42R) des Vorderes-Ende-Verbindungsteils (32L, 32R) nach oben hervorsteht, wobei ein Anbringen des U-Teils (36L, 36R) an dem sich aufweitenden Leitungsteil (25) einen Spalt (W3) zwischen einem linken entfernten Ende (37L) und einem rechten entfernten Ende (37R) des unteren Rahmens (30L, 30R) reduziert und verursacht, dass eine geschweißte Länge effektiv von dem buckelförmigen Aufwölbungsteil (43L, 43R) genutzt wird.

4. Rahmenstruktur für ein Motorroller-Typ-Fahrzeug nach einem der Ansprüche 1 bis 3, bei der ein Verstauteil-Stützelement (140) zum Stützen eines Verstauteils (114) zum Verstauen eines Objekts mit dem Hinteres-Ende-Teil (31L, 31R) von sowohl dem linken als auch rechten unteren Rahmen (30L, 30R) separat von dem Querrohr (60) verbunden ist, wobei das Verstauteil-Stützelement (140) über dem Querrohr (60) positioniert ist.

5. Rahmenstruktur für ein Motorroller-Typ-Fahrzeug nach einem der Ansprüche 1 bis 4, wobei ein Verbindungsteil des unteren Rahmens (30L, 30R), das Querrohr (60) und die hinteren Rahmen (70L, 70R), wenigstens ein Teil (87, 88) der unteren Rahmen (30L, 30R) und wenigstens ein Teil (89, 91) der hinteren Rahmen (70L, 70R) verbunden sind.

6. Rahmenstruktur für ein Motorroller-Typ-Fahrzeug nach einem der Ansprüche 1 bis 5, bei der ein Gesamtumfang der Endteile (63L) des Querrohrs (60) mit einer querverlaufenden Außenfläche (92) und einer querverlaufenden Innenfläche (93) des Hinteres-Ende-Teils (31L, 31R) des unteren Rahmens (30L, 30R) verbunden ist und mit einer querverlaufenden Außenfläche (94) und einer querverlaufenden Innenfläche (95) der Vorderes-Ende-Teile (71L, 71R) des hinteren Rahmens (70L, 70R) verbunden ist.

7. Rahmenstruktur für ein Motorroller-Typ-Fahrzeug nach einem der Ansprüche 1 bis 6, bei der
das Ziehen einer Linie (173) von einem Mittelpunkt (P3) eines Vorderrads (15) zu einer Mitte (P4) einer Bohrung in einem linken Drehverbindungsteil (78L), wobei das Vorderrad (15) drehbar an einem unteren Ende der Vordergabel (13) angebracht ist und der linke Drehverbindungsteil (78L) mit dem vorderen Endteil (71L) des linken hinteren Rahmens (70L) verschweißt ist, um einen Motor (106) abzustützen, und
das Ziehen einer Linie (174) von dem Mittelpunkt (P3) zu einer Mitte (P5) einer Bohrung in einem rechten Drehverbindungsteil (78R), das mit dem Vorderes-Ende-Teil (71R) des rechten hinteren Rahmens (70R) verschweißt ist, um den Motor (106) zu stützen,
die linke Bohrungsmitte (P4), den Mittelpunkt (P3) des Vorderrads (15) und die rechte Bohrungsmitte (P5) in einer V-Form;
die Zwischenteile (34L, 34R) des linken und rechten unteren Rahmens (30L, 30R), die parallel zu den Linien (173, 174) der V-Form sind,
verbindet.

## Revendications

1. Structure de cadre pour véhicule de type scooter, comprenant :
un tuyau collecteur (12) pour supporter de manière directionnelle un guidon (16) et une fourche avant (13), le guidon (16) étant saisi par un conducteur, et la fourche avant (13) étant raccordée au guidon (16) ;
un tube principal creux (20) s'étendant vers le bas depuis le tuyau collecteur (12) vers l'arrière du véhicule ;
une paire de cadres inférieurs gauche et droit (30L, 30R) reliés à une partie inférieure du tube principal (20) et les deux s'étendant depuis la partie inférieure du tube principal (20) vers l'arrière du véhicule ;
des parties d'extrémité avant (22L, 22R) des deux cadres inférieurs gauche et droit (30L, 30R) étant reliées à la partie inférieure du tube principal (20) ;
un tube transversal (60) s'étendant dans une direction latérale est relié à deux parties d'extrémité arrière (31L, 31R) des cadres inférieurs gauche et droit (30L, 30R) ; et
des parties d'extrémité avant (71L, 71R) d'une paire de cadres arrière gauche et droit (70L, 70R) s'étendant vers le haut et vers l'arrière du véhicule étant reliées à des parties d'extrémité gauche et droite respectives (63L, 63R) du tube transversal (60),
**caractérisée en ce que** le tube principal (20) a une partie de tube extensible (25) qui s'étend dans une direction latérale au niveau d'une extrémité inférieure, et
chacun des cadres inférieurs gauche et droit (30L, 30R) comprend :
une partie de jonction d'extrémité avant (32L, 32R) reliée à une surface latérale gauche ou droite (21L, 21R) de la partie de tube extensible (25) ;
une partie de jonction d'extrémité arrière (33L, 33R) reliée à une circonférence d'extrémité gauche ou droite (61L, 61R) du tube transversal (60) ; et
une partie intermédiaire (34L, 34R) prévue dans une zone entre la partie de jonction d'extrémité avant (32L, 32R) et la partie de jonction d'extrémité arrière (33L, 33R),
dans laquelle une hauteur (H1) de la partie intermédiaire (34L, 34R) est inférieure à une hauteur (H2) de la partie de jonction d'extrémité arrière (33L, 33R).

2. Structure de cadre pour véhicule de type scooter selon la revendication 1, dans laquelle les parties d'extrémité avant (22L, 22R) des cadres inférieurs (30L, 30R) sont formées de sorte à couvrir les surfaces latérales gauche et droite (21L, 21R) de la partie extensible (25).

3. Structure de cadre pour véhicule de type scooter selon la revendication 1 ou 2, dans laquelle la partie de jonction d'extrémité avant (32L, 32R) des cadres inférieurs (30L, 30R) comprend :
une partie en U (36L, 36R) découpée dans une forme de U ; et
une partie de renflement en forme de dôme (43L, 43R) formée de sorte à former un renflement en forme de dôme de telle sorte qu'une surface supérieure (42L, 42R) de la partie de jonction d'extrémité avant (32L, 32R) se projette en saillie vers le haut, l'ajustement de la partie en U (36L, 36R) à la partie de tube extensible (25) réduisant un espace (W3) entre une extrémité distale gauche (37L) et une extrémité distale droite (37R) des cadres inférieurs (30L, 30R), et amenant une longueur soudée à être utilisée efficacement par la partie de renflement en forme de dôme (43L, 43R).

4. Structure de cadre pour véhicule de type scooter selon l'une quelconque des revendications 1 à 3, dans laquelle un élément de soutien de partie de rangement (140) pour soutenir une partie de rangement (114) pour ranger un objet est relié aux parties d'extrémité arrière (31L, 31R) des deux cadres inférieurs gauche et droit (30L, 30R) séparément du tube transversal (60), l'élément de soutien de partie de rangement (140) étant positionné sur le tube transversal (60).

5. Structure de cadre pour véhicule de type scooter selon l'une quelconque des revendications 1 à 4, dans laquelle dans une partie de jonction des cadres inférieurs (30L, 30R), du tube transversal (60), et des cadres arrière (70L, 70R), au moins une partie (87, 88) des cadres inférieurs (30L, 30R) et au moins une partie (89, 91) des cadres arrière (70L, 70R) sont reliées.

6. Structure de cadre pour véhicule de type scooter selon l'une quelconque des revendications 1 à 5, dans laquelle une circonférence entière des parties d'extrémité (63L), du tube transversal (60) est reliée à une surface latéralement externe (92) et à une surface latéralement interne (93) des parties d'extrémité arrière (31L, 31R) des cadres inférieurs (30L, 30R), et est reliée à une surface latéralement externe (94) et à une surface latéralement interne (95) des parties d'extrémité avant (71L, 71R) des cadres arrière (70L, 70R).

7. Structure de cadre pour véhicule de type scooter selon l'une quelconque des revendications 1 à 6, dans laquelle
le tracé d'une ligne (173) depuis un point central (P3) d'une roue avant (15) jusqu'à un centre (P4) d'un trou dans une partie de jonction de pivot gauche (78L), la roue avant (15) étant rattachée de façon rotative à une extrémité inférieure de la fourche avant (13), et la partie de jonction de pivot gauche (78L) étant soudée à la partie d'extrémité avant (71L) du cadre arrière gauche (70L) afin de soutenir un moteur (106), et
le tracé d'une ligne (174) depuis le point central (P3) jusqu'à un centre (P5) d'un trou dans une partie de jonction de pivot droite (78R) soudée à la partie d'extrémité avant (71R) du cadre arrière droit (70R) afin de soutenir le moteur (106), relient
le centre du trou gauche (P4), le point central (P3) de la roue avant (15), et le centre du trou droit (P5) dans une forme en V ;
les parties intermédiaires (34L, 34R) des cadres inférieurs gauche et droit (30L, 30R) étant parallèles aux lignes (173, 174) de la forme en V.
